# FASCICULE DE BREVET EUROPEEN

(11) **EP 1 028 644 B1**
(45) Date de publication et mention de la délivrance du brevet: **12.12.2001**
(21) Numéro de dépôt: 98931157.6
(22) Date de dépôt: 16.07.1998
(51) Int. Cl.: A47G 33/08, C03C 27/10

(54) **DECORATIONS POUR ARBRES DE NOEL COMPOSEES DE PLUSIEURS OBJETS EN VERRE SOUFFLE ASSEMBLES ENTRE EUX**
CHRISTBAUMSCHMUCK AUS MITEINANDER VERBUNDENEN GEBLASENEN GLASOBJEKTEN
CHRISTMAS TREE DECORATIONS CONSISTING OF SEVERAL BLOWN GLASS OBJECTS ASSEMBLED TOGETHER

(30) Priorité: 04.11.1997 PL 32301197
(43) Date de publication de la demande: 23.08.2000
(73) Titulaire: Mostowski, Aleksander, 42-271 Czestochowa (PL)
(72) Inventeur: Mostowski, Aleksander, 42-271 Czestochowa (PL)
(74) Mandataire: Grünecker, Kinkeldey, Stockmair & Schwanhäusser Anwaltssozietät
(86) Numéro de dépôt international: PL9800032
(87) Numéro de publication internationale: WO9922628

(56) Documents cités:
- FR-A- 2 723 938
- PL-B- 120 335
- US-A- 4 493 862

## Description

La production des decorations pour arbres de Noël composées de plusieurs objets soufflés assemblés solidaires fait l'objet du brevet.

Plusieurs méthodes en matière d'assemblage d'éléments en verre sont connus.

La méthode thermique consiste à souder des éléments préchauffés jusqu'a la temperature de ramolissement qui est une technique dificille, exigeant beaucoup de main d'oeuvre. Elle nécessite de hautes qualifications et une quantité de travail considérable, elle entraîne une grande consommation d'energie thermique et l'assemblage qui en résulte est rigide, fragile et cassant.

Les éléments en verre peuvent être également assemblés au moyen des colles. Mais pour cela, il faut des éléments a grande surfaces et la plupart des colles est soumise au processus de vieillissement et ceci en particulier sous l'influence des intempéries.

Les éléments en verre peuvent être également assemblés au moyen des charpentes métalliques en forme de cadres. C'est la méthode utilisée pour la production des vitraux, elle n'est adaptée pratiquement que pour les éléments plats.

Selon la description du brevet polonaise n ° 120335, on connaît la méthode d'assemblage des éléments en verre et/ou céramiques consistant à faire les attaches de construction qui sont enduites ou noyés dans la matière d'assemblage fondue étant donné que la température des éléments en verre et/ou céramique est maintenue entre 50°C et la temperature de fusion de la matière d'assemblage pour faire solidifier ensuite la matière d'assemblage. Les attaches de deux ou plusieurs éléments en verre et/ou céramiques formées sont ensuite definitivement assemblées par le brassage ou le soudage.

L'essentiel de la méthode selon l'invention consiste à éliminer les opérations thermiques grace à l'exécution a l'étape de production des objets soufflés en verre sous forme des sieges aux dimensions et à l'implantations dans l'espace des corps de base définies des objets soufflés auxquels on met librement des tenons d'autres éléments adaptés par leur forme tandis que le siège lui meme et les tenons avant d'assembler les éléments sont recouverts d'un liant plastique à prise rapide.

La méthode de réalisation des assemblages consiste à faire dans les corps de base dans la phase de production de l'objet soufflé en verre un siège à un profil et à la disposition dans l'espace permettant de mettre librement le tenon pour les autres éléments de la décoration pour l'arbre de Noël de manière qu'elle puisse être placée conformément à la forme voulue et dans la direction convenable tandis que les surfaces du siège et du tenon d assemblage sont enduites d'un liant plastique à prise rapide pour les assembler après et les mettre dans une moule assurant des formes voulues et reproductibles des décorations pour arbres de Noël pendant la prise du liant. En fonction du nombre des éléments assemblés dans le corps de base on peut avoir un ou plusieurs sièges pareils pourront être faits dans un ou plusieurs éléments assemblés et sur d'autres éléments il y a des tenons d'assemblage convenablement formés.

L'avantage de la méthode selon l'invention consiste à la possibilité d'assembler plusieurs objets soufflés en verre de façon durable en formant des décorations pour arbres de Noël aux formes et dimensions variées, aux dispositions plates au spatiales quelconques étant donné que l'assemblage est fait sans réchauffer et après la solidification l'assemblage est durable mais élastique.

Les décorations en verre pour arbres de Noël ainsi faits en plusieurs objets en verre soufflés assemblés solidairement pourront être soumis à d'autres opérations d'ornamentation de la surface telle que la peinture, le pâtage, le brocart et pareilles.

## Revendications

1. Procédé de production d'une décoration pour arbre de Noël composée de plusieurs objets en verre soufflé assemblés de manière solidaires entre eux; les objets en verre soufflé comprenant un élément de base et des autres éléments, les autres éléments étant pourvus de tenons, pendant la production de l'élément de base on fait dans le corps de l'élement de base des sièges aux dimensions et dispositions spatiales définies, dans ces sièges on met les tenons de forme adapté aux sièges, **caractérisé en ce que**, avant que l'élément de base et les autres éléments soient assemblés, chacun des surfaces des sièges et des tenons est enduite par un liant plastique à prise rapide.

2. Procédé selon la revendication 1, **caractérisé en ce qu'**apres la prise l'assemblage : siège - tenon est légerement élastique et la decoration brute peuvent alors être soumises à des traitement de la surface telles que la peinture, le patinage, le brocart et pareilles.

## Patentansprüche

1. Verfahren zur Herstellung eines Weihnachtsbaumschmucks, gebildet durch mehrere Glasblasteile, die fest miteinander verbunden sind, wobei die Glasblasteile ein Basiselement und andere Elemente umfassen, die anderen Elemente mit Zapfen bzw. Stiften versehen sind, man während der Herstellung des Basiselements in dem Körper des Basiselements Sitze mit definierten räumlichen Abmessungen und Anordnungen vorsieht, man in diesen Sitzen die Zapfen bzw. Stifte von an die Sitze angepasster Form anbringt,
**dadurch gekennzeichnet,**
**dass**, ehe das Basiselement und die anderen Elemente zusammengebaut werden, sowohl die Oberflächen der Sitze als auch der Zapfen oder Stifte mit einem schnellabbindenden Kunststoff-Bindemittel überzogen werden.

2. Verfahren nach Anspruch 1, **dadurch gekennzeichnet, dass** der Sitz-Zapfen- bzw. Sitz-Stift-Zusammenbau nach dem Abbinden etwas elastisch ist und der rohe Schmuck dann Oberflächenbearbeitungen wie Bemalung, Patinierung, Brokat und ähnlichem unterzogen werden kann.

## Claims

1. Process for producing a Christmas tree decoration consisting of several blown glass objects assembled together in a fixed manner, the blown glass objects comprising a base element and other elements, the other elements being provided with pegs, seats with precise dimensions and spacial arrangements being made in the body of the base element during the production of the base element, and lugs with a shape adapted to the seats being placed in the seats, **characterized in that**, before the base element and the other elements are assembled, each of the surfaces of the seats and the lugs is coated with a quick-setting plastic binder.

2. Process according to claim 1, **characterized in that** after setting, the seat-lug assembly is slightly elastic and the unfinished decoration may then be subjected to surface treatments such as painting, application of a patinata, brocading and the like.
